# EUROPEAN PATENT SPECIFICATION

(11) **EP 1 000 882 B1**
(45) Date of publication and mention of the grant of the patent: **17.03.2004**
(21) Application number: 99308703.0
(22) Date of filing: 02.11.1999
(51) Int. Cl.: B65G 47/256

(54) **An aligning and feeding device for a parts feeder**
Eine vorrichtung zum ausrichten und zuführen von Teilen
Dispositif pour l'alignement et l'alimentation de pièces

(30) Priority: 04.11.1998 JP 31289598
(43) Date of publication of application: 17.05.2000
(73) Proprietor: SUMITOMO WIRING SYSTEMS, LTD., Yokkaichi City Mie 510 (JP)
(72) Inventor: Yamada, Makoto, Sumitomo Wiring Systems, Ltd., Yokkaichi-City, Mie 510-8503 (JP)
(74) Representative: Spall, Christopher John

(56) References cited:
- CH-A- 505 666
- DE-A- 3 026 647
- US-A- 3 419 129
- US-A- 4 847 487
- US-A- 5 117 963

## Description

This invention relates to an aligning and feeding device for a parts feeder.

In general, a parts feeder may be used for transporting small pieces, such as rubber plugs, to a processing device in a desired orientation.

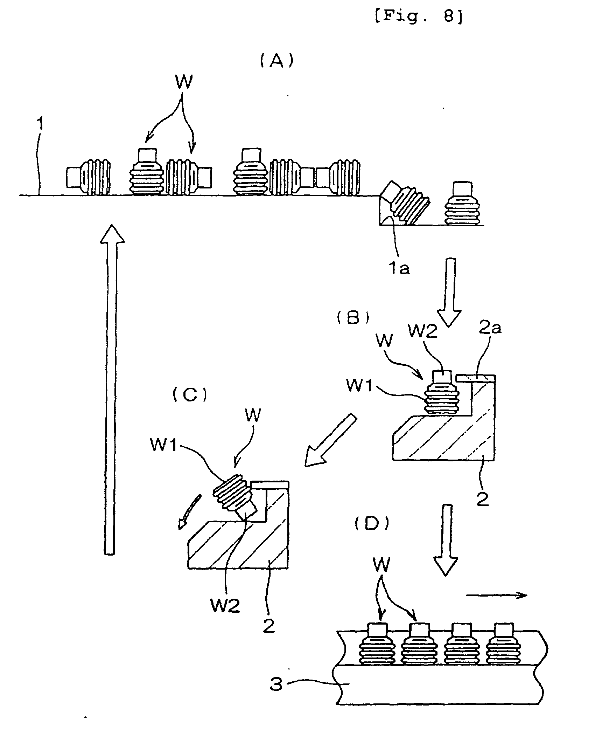

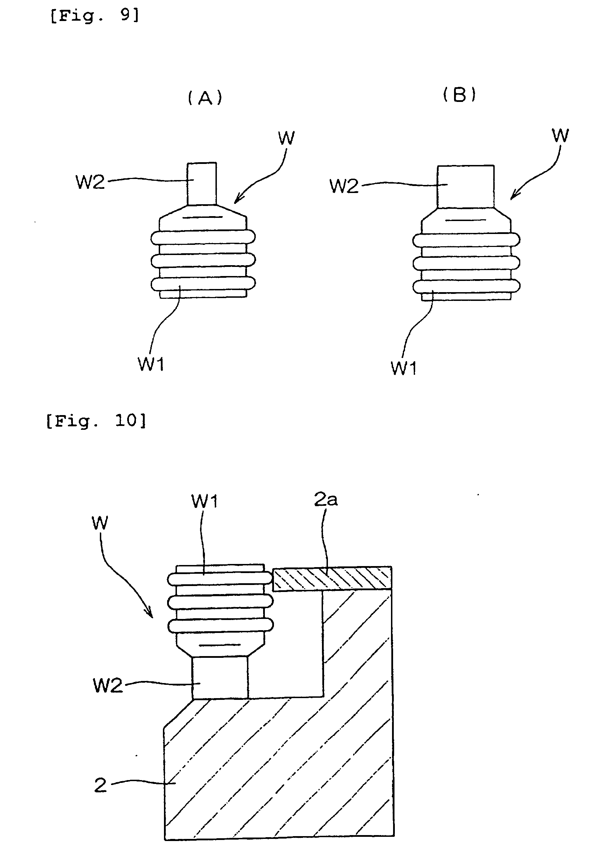

Figure 8 of the accompanying drawings illustrates diagrammatically the steps through which a rubber plug is moved by a mechanism normally provided as a parts feeder. Figure 9 is a front view of a part W to be fed to the parts feeder.

As illustrated in Figures 9A and 9B in one example, the part W comprises a rubber plug. The rubber plug is a cylindrical body of stepped outline comprising a first portion W1 of larger diameter and a second continuous and concentric portion W2 of smaller diameter. The plugs are so positioned and arranged that in a given attitude the first and second portions are both aligned in a corresponding orientation at the processing device.

As shown in Figure 8, the parts feeder has a collecting area 1 which collects parts from a storage area for storing the parts W, a sorting area 2 for adjusting the attitude of the collected parts W, and a transporting area 3 for transporting the aligned parts W from an upper stream side in an order such as described above. The parts W are then transported to a lower stream side by giving, to a sorting area 2 and a transporting area, vibrations generated at an oscillating area which is not illustrated.

As shown in Figure 8 (A), in the collecting area, the parts are fed to a lower stream side by providing a difference in level 1a, thereby causing an axis of part W which represents a column to follow a vertical line. At. this stage, some of the parts W1 are disposed at attitdues with the larger diameter portion W1 upward (ie. the smaller diameter portion W2 being downward) whilst some are contrary to the former.

As shown in Figure 8(B) a drop board 2a which regulates the attitude along the periphery of the part W is provided in the sorting area. Thus when a part with its larger diameter portion W1 upward is transported as shown in Figure 8 (C), the larger diameter portion W1 of the part W makes contact with the drop board 2a. The part W1 will then deviate from a normal transport direction followed by collection into a collecting area 1.

As shown in Fig. 8 (D), only the parts W sorted out at the sorting area 2 are transported to the lower stream side.

The structure or method mentioned above is, however, inefficient, and is sometimes difficult to sort out. Figure 10 represents a schematic sectional drawing showing a major area of the conventional parts feeder.

First of all, with reference to Figure 9 (B), there are sometimes parts of which the larger diameter portion W1 and the smaller diameter portion W2 are comparatively closer in dimension, and therefore similar in shape, depending on the particular part W. Even when sorting parts of such a shape by use of the above mentioned drop board 2a, some parts may remain on the sorting area 2 despite their attitude being contrary to the normal as shown in Figure 10. This demonstrates a deficiency such that the parts W flowed as if they were located on the downstream side.

Furthermore, with the structure or method mentioned above, sorting was merely carried out for the parts of which the attitude was normal as shown in Figure 8, giving rise to a problem of reducing the yield rate by a quantity of parts W disposed at an opposite attitude.

CH 505 666 discloses a device for forming a line of uniformly orientated pieces from pieces having two or more orientations. The device comprises a barrel which receives pieces from a feeder and in which the orientation of the piece is determined. A movable member receives the pieces from the barrel and delivers the pieces to one of an inverting route and a non-inverting route depending on the pieces orientation. Each route is a separate conduit that is connectable to a transport conduit by a second moveable member. The pieces are delivered through the inverting or non-inverting route to the transport conduit by suction.

The present invention was made in the light of the above mentioned problems, with an aim to provide an aligning and feeding device capable of efficiently transporting parts reliably at a normal attitude.

According to our invention there is provided an aligning and feeding device for installation in a transport route of a parts feeder, the aligning and feeding device comprising an attitude identifying means for identifying the attitude of parts, inverter means for inverting the attitude of selected parts, the attitude identifying means including a dividing member arranged to receive parts from an upstream side of the transport route and deliver the parts to a downstream side of the transport route having a given orientation, and control means for controlling reciprocal motion of the dividing member to divide the parts into one of an inverting route or a non-inverting route based on the identified attitude of the parts
characterised in that the inverter means comprises a tube connecting a pair of communicating holes and defining the inverting route, one of the communicating holes facing a pressurised air supply hole and the other communicating hole facing a transport exhaust hole, and the dividing member receiving a part in a position blocking the air supply hole and transport hole and being movable to one of two positions to unblock the air supply hole and transport hole such that, in one unblocking position, the dividing member delivers the part to the downstream side of the transport route via the inverting route and, in the other unblocking position the dividing member delivers the part to the downstream side of the transport route via the non-inverting route by-passing the inverting route.

With the invention which contains this specific item, because of the identification of the attitude of parts by the attitude identifying means in carrying out the inversion of parts, an inverting function of the inverting means is made possible without fault. In addition, even when the attitude of the parts is not normal, parts are fed to a lower stream side by inversion without returning them to an upper stream. This makes it possible to suppress the reduction in a yield rate. With the present invention the parts can efficiently be inverted with the use of less material owing to the change in the attitude of parts by switching transport routes.

One embodiment of our invention and a conventional parts feeder are illustrated in the accompanying drawings in which:
**Figure 1** is a perspective view showing an outline of a parts feeder which adopts an aligning and feeding device in Fig. 1;
**Figure 2** is a front view showing the outline of the parts feeder which adopts an aligning and feeding device in Fig. 1;
**Figure 3** is a transverse cross section of the aligning and feeding device;
**Figure 4** is a transverse cross section of the aligning and feeding device;
**Figure 5** is a schematic plan view showing an enlarged essential part of a slide holder;
**Figure 6** is a block diagram showing a control unit of an aligning and feeding device in Figure 1;
**Figure 7** is a flow chart showing the motion of an aligning and feeding device of Figure 1;
**Figure 8** is a layout showing transport procedures which diagrammatically illustrates a mechanism provided in a general parts feeder;
**Figure 9** is a schematic cross section showing an essential part of the conventional parts feeder; and
**Figure 10** is a schematic cross section showing an essential part of the conventional parts feeder.

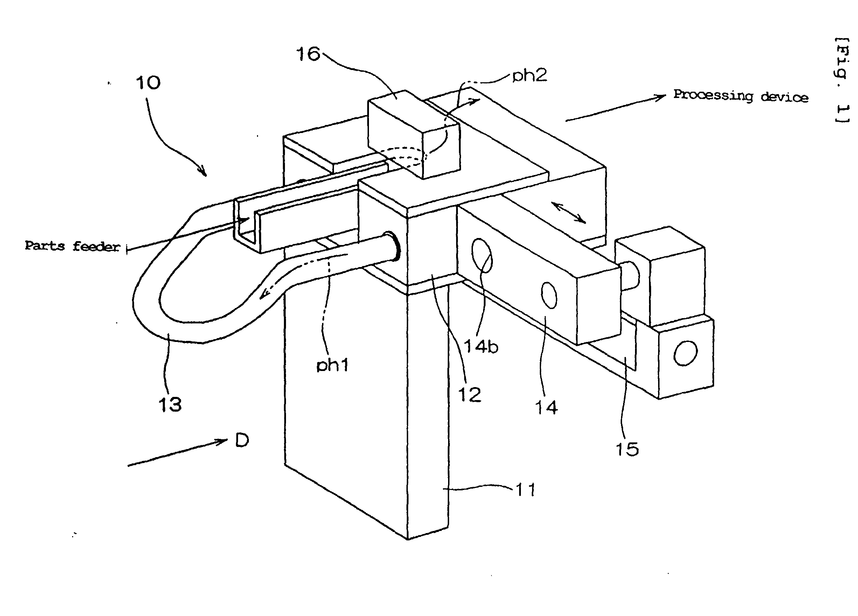

As illustrated in Figures 1-7 of the accompanying drawings, an attitude identification means 16 is provided in a transport route of a parts feeder 20 which transports parts W in a desired orientation. The attitude identifying means 16 can identify the attitude of parts W. According to the attitude thus identified, inverting means 13 and 14 correct the attitude of the parts W. Owing to the clear identification of the attitude of parts W, sorting the attitude of the parts W can be achieved without fail by an inverting means. Even when the attitude of the parts W is not normal, reduction in a yield rate can be controlled because of the feed to a downstream side by inverting them.

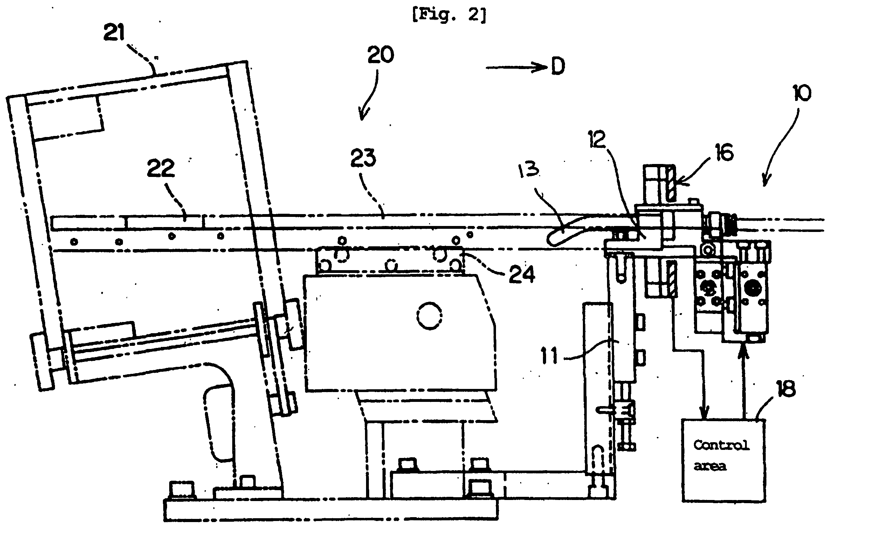

With reference to Figure 2, an illustrated parts feeder 20 is equipped with a drum-form storage area 21, a collecting area 22 for collecting parts from the storage area 21, a chute-form transporting area 23 for feeding the collected parts W, and an oscillating area 24 which support the transporting area 23 in an oscillating manner. An aligning and feeding device 10 of the present invention is provided on a parts feeder 20 through a mounting member 11 at the downstream end at the above mentioned transporting area 23.

The illustrated parts feeder 20 is to a certain extent simplified compared with the preceding example, namely by feeding a columnar shape part (rubber plug) W having a given orientation to a downstream side in such a manner that the axis exclusively follows along the transport direction D.

The parts W transported on the above mentioned transporting area 23 are at different attitudes, namely at a normal given attitude to be fed to a processing device (not illustrated) and an attitude inverted by 180° to the normal attitude.

These parts W at different attitudes are fed to the aligning and feeding device 10. In this embodiment, respective parts are disposed at attitudes of which their axes are relatively slanted to a transport direction with the parts having a larger diameter portion W1 at the downstream side mixed with those at the upstream side.

With reference to Figure 1, Figure 3 and Figure 4, the aligning and feeding device 10 retains a near-block shape body 12 supported on the upper end of the above mentioned mounting member 11. The main body 12 has an internal section in which a dividing space S is communicably conducted with the downstream end of the transporting area 23 on the above mentioned parts feeder 20.

In this dividing space S, a pair of communicably conducting holes 12a and 12b penetrate horizontally through the transport direction D at the upper stream side in a transport direction D of parts feeder 20, and are interconnected through a tube 13.

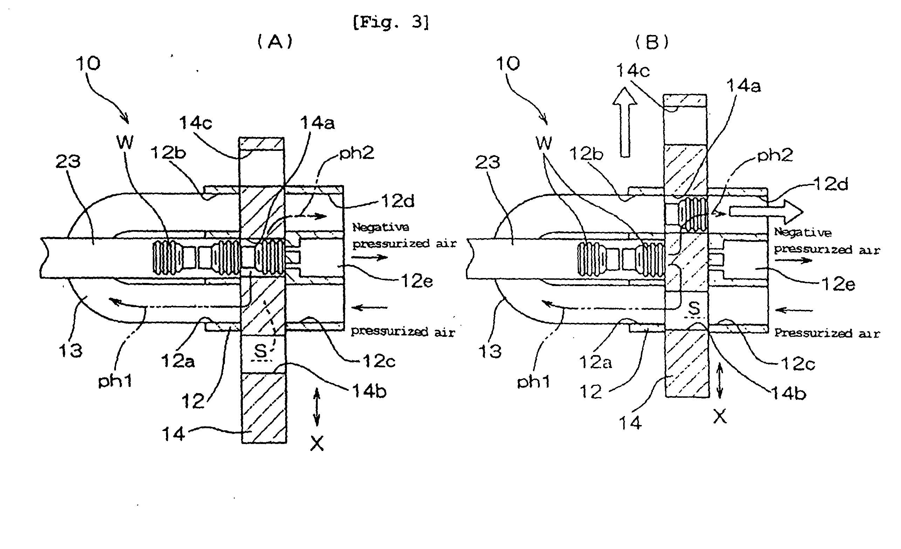

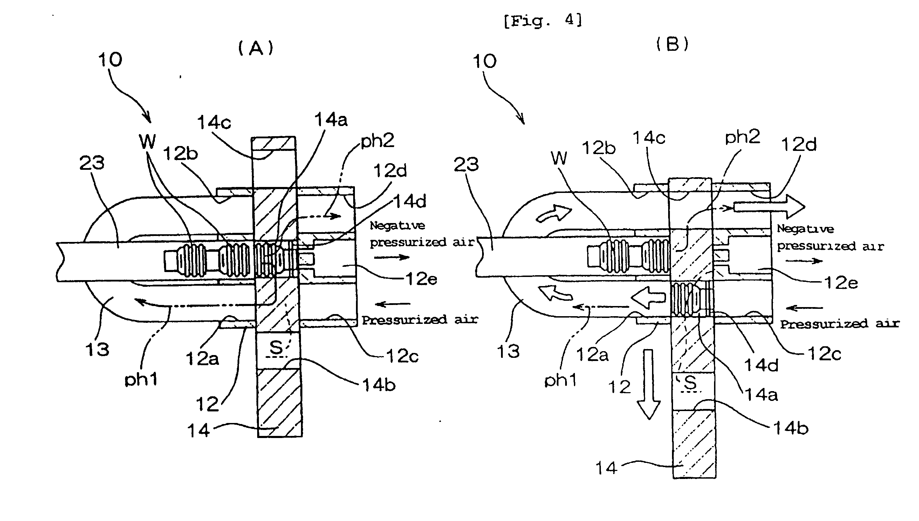

A pressurising air supply hole 12c and a transport hole 12d are provided in the main part 12. The holes 12c and 12d horizontally face respective communicating holes 12a and 12b along the downstream transport direction D of the parts feeder 20. The pressurised air supply hole 12c and the transport exhaust hole 12d are blocked by a slide holder 14 which will be described later, under the condition shown in Figure 3(A) and Figure 4(A), and is designed to be released at the same time at a certain timing as shown in Figure 3(B) and Figure 4(D). The pressurised air supply hole 12c is connected with a pressurised air supply source (not shown), and is provided for transporting the parts W from a transporting hole 12d. The transporting hole 12d can be connected with another communicating hole by supplying the pressurised air to the above mentioned one communicating hole 12a when both holes 12c and 12d are released by the slide holder 14.

The slide holder 14 is reciprocably movable along a horizontal direction X which intersects a parts transporting direction of the parts feeder 20 in the above mentioned dividing space S. Furthermore, in order reciprocably to transport the slide holder 14, a cylinder 15 is mounted on the lower surface of the main body 12.

The slide holder 14 is, at the home position as shown in Figure 3(A) and Figure 4(A), equipped with a concave area 14a to which parts W are communicably conducted in a receivable manner from the transporting area 23. Communicably connecting holes 14b and 14c are formed on both sides of the concave area 14a, and the concave area 14a and the communicably conducted holes 14b and 14c are so designed with enough space that only one correctly standing or inverted part W can be accommodated therein.

The slide holder 14 is so designed that at the above mentioned home position it will close the respective communicable conducting holes 12a and 12b (consequently, pressurised air hole 12c and transport hole 12d) provided on the main body 12, and any compatible one amongst respective communicable conducting holes 14b and 14c will release the communicable conducting hole 12b (or 12a) of the main body 12 when the above mentioned concaved area 14 is connected with either of the communicable conducting holes 12a (12b). In consequent, when the concave area 14a is connected with either communicable conducting hole 12a, parts W are carried out through a tube 13 from the transporting hole 12d by pressurised air in a state in which the attitude is 180° inverted.

On the other hand, when the concave area 14a is connected with another communicable conducting hole 12b, parts W are carried out in the same attitude by bypassing the tube 13.

In such a way, in the illustration as shown, a tube 13 constitutes an attitude inverting route ph1 whilst the transporting hole 12d constitutes a non-inverting route ph2. In this case, in the illustrated embodiment, a negative pressurised air hole 12e connected with a concave area 14a in the home position is formed, and, by applying a negative pressure from this negative pressurised air hole 12e, parts W in a transporting area 23 are introduced into the concaved area 12a, one by one.

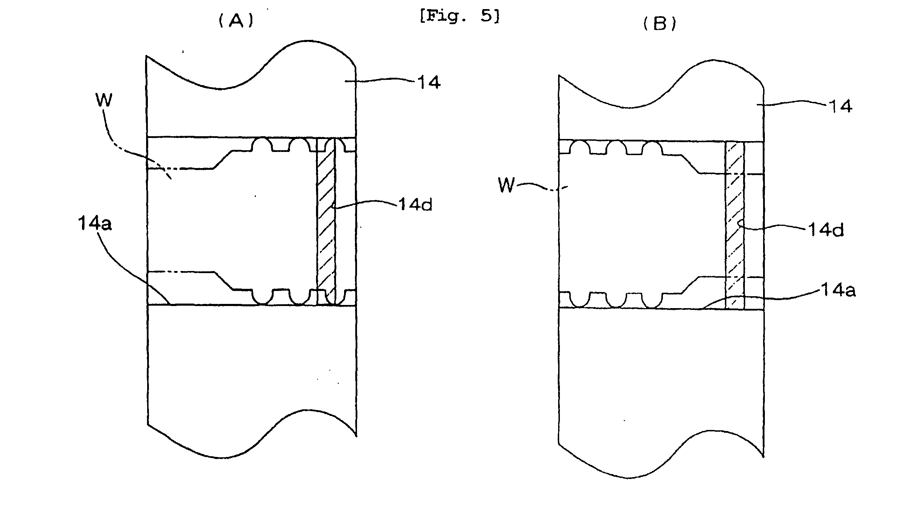

Figure 5 is a plan view showing an enlarged essential area of a slide holder 14.

Referring to Figure 1 and Figure 5, at the bottom area of the concave area 14a, a rectangular insertion hole 14d defining a transport slit is formed. A photoelectric sensor 16 is also mounted on the main body. The photoelectric sensor 16 is designed in such a manner that light projected from the upper side onto a transparent slit 14d is then received on the lower side, and the attitude of the part W can be judged according to the quantity of the light transmitted therethrough.

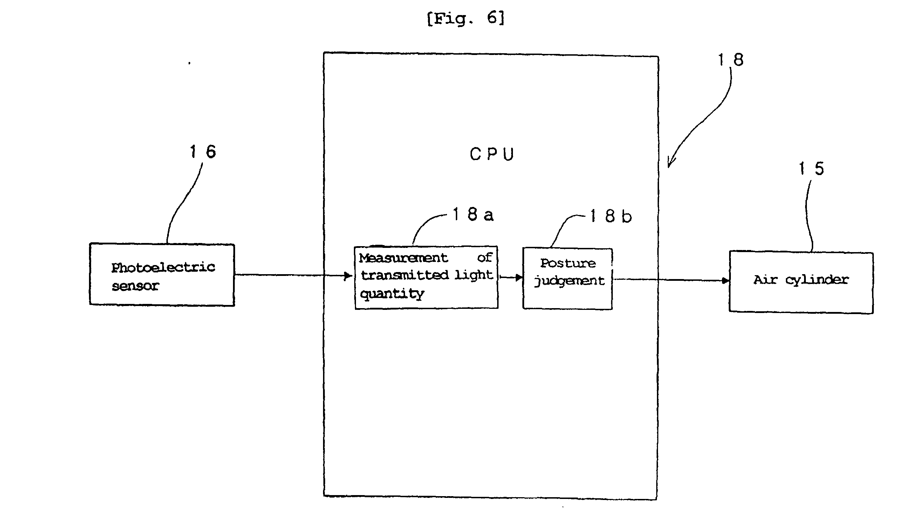

Figure 6 is a block diagram showing a control unit of an aligning and feeding device 10. In reference to the drawing, on the aligning and feeding device, a CPU 18 is provided for receiving a detected signal from the photoelectric sensor 16, and on the CPU 18, a cylinder 15 which drives the above mentioned slide holder 14 is connected in a controllable manner. The CPU 18 is materialised by use of a micro computer having ROMs, RAMs, etc., and consists of a measuring area 18a which measures a transmitted light quantity from a signal entered via the photo sensor 16 using the program, and an attitude judging area 18b which judges the attitude of the parts W. According to the judged results of an attitude judging area 18b, the CPU 18 controls an air cylinder 15 as follows.

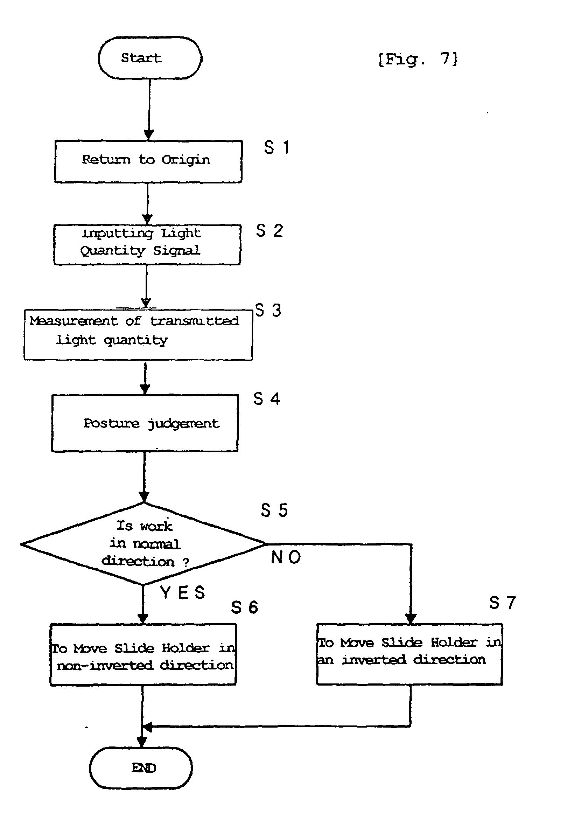

Figure 7 represents a flow chart showing a motion of an aligning and feeding device 10 in Figure 1.

First of all, in the step S1, a power source is energised which is followed by the start of an aligning and feeding device 10, the photoelectric sensor 16 enables the attitude of parts W to be identified, the CPU 18 drives the air cylinder 15, thereby moving the slide holder 14 to the home position as shown in Figure 3(A) or Figure 4(A). In this state, the parts feeder 20 is driven, and parts W are gradually transported from a transporting area 23 into the main body 12.

In this case, as shown in Figure 3(A), when a part W is transported in a normal attitude, the CPU 18 is based on the judged results at step S3, and S4 drives a slide holder 14 as shown in Figure 3(B), and transports the parts W which were transferred to the concave area 14a to a non-inverting route ph2 (step 5&S6). In this way, the pressurised air supplied from a pressurised air supply hole 12c pressurises the parts W from a tube 13, and as a result of supply to a processing device (not shown) at a lower stream side, the parts W which were transported in a normal attitude are directly supplied by bypassing the attitude inverting route ph1.

On the other hand, as provisionally shown in Figure 4(A), when the parts W are in an inverted position, as shown in Figure 4, the CPU 18 drives the slide holder 14 in an inverted direction to the above, thereby transporting the parts W which are transferred to the concave area 14a to an attitude inverting route ph1 (step S54S7).

In this way, pressurised air supplied from the pressurised air supply hole 12c introduces the parts W into a tube 13 by driving them, and, by having them go through this tube 13, and the parts W are fed to a processing device (not shown) at a downstream side in an inverted state.

As described above, in the above mentioned embodiment, as the posture of parts W having a smaller dimensional difference between a larger diameter area W1 and a smaller diameter area W2 as shown in Figure 9(B) can be inverted and transported without fail, and, in addition, reduction in a yield rate can be controlled. This makes it possible to achieve a remarkable effect of efficient transport in a duly normal attitude.

Particularly, there is an advantage that changes in attitude of the parts W by switching the attitude inverting routes ph1 and ph2 enable efficient inversion of the parts W.

The embodiment described above is only one preferable embodiment of the present invention. The present invention is not limited to the above mentioned embodiment alone. That is, it is possible to make a wide variety of changes in design within a scope of the claims of the present invention.

## Claims

1. An aligning and feeding device for installation in a transport route of a parts feeder (20), the aligning and feeding device comprising an attitude identifying means (14,16) for identifying the attitude of parts (W), inverter means (13) for inverting the attitude of selected parts (W), the attitude identifying means (14,16) including a dividing member (14) arranged to receive parts (W) from an upstream side of the transport route and deliver the parts (W) to a downstream side of the transport route having a given orientation, and control means (18) for controlling reciprocal motion of the dividing member (14) to divide the parts (W) into one of an inverting route (ph1) or a non-inverting route (ph2) based on the identified attitude of the parts (W) **characterised in that** the inverter means (13) comprises a tube (13) connecting a pair of communicating holes (12a, 12b) and defining the inverting route (ph1), one of the communicating holes (12a) facing a pressurised air supply hole (12c) and the other communicating hole (12b) facing a transport exhaust hole (12d), and the dividing member (14) receiving a part (W) in a position blocking the air supply hole (12c) and transport hole (12d) and being movable to one of two positions to unblock the air supply hole (12c) and transport hole (12d) such that, in one unblocking position, the dividing member (14) delivers the part (W) to the downstream side of the transport route via the inverting route (ph1) and, in the other unblocking position the dividing member (14) delivers the part (W) to the downstream side of the transport route via the non-inverting route (ph2) by-passing the inverting route (ph1).

2. An aligning and feeding device as set forth in claim 1, in which the dividing member (14) comprises a slide holder equipped with two complementary holes (14b, 14c) and a concave area (14a) which receives the part (W) in the blocking position of the dividing member (14) and, in one of the unblocking positions, one of the complementary holes (14c) unblocks transport hole (12d) and the concave area (14c) delivers the part (W) to the inverting route (ph1) and, in the other unblocking position, the other complementary hole (14b) unblocks the air supply hole (12c) and the concave area (14a) delivers the part (W) to the non-inverting route (ph1).

3. An aligning and feeding device according to claim 2, in which an insertion hole (14d) formed in the concave area (14a) defines a transport slit, and a photoelectric sensor (16) is adapted to judge the quantity of light transmitted through the slit to indicate the attitude of a part (W).

4. An aligning and feeding device according to claim 3, in which the control means (18) for reciprocating the dividing member (14) is operated in response to a detected signal from the sensor (16) to move the dividing member (14) between the blocking position and the unblocking position.

5. An aligning and feeding device according to claim 4, in which the control means (18) comprises a CPU (18) for receiving the detected signal, and a cylinder (15) for moving the dividing member (14) in response to the CPU (18).

6. An aligning and feeding device according to claim 5, in which the CPU (18) is materialised by the use of a micro computer and consists of a measuring area (18a) which measures a transmitted light quantity from a signal entered via the sensor (16), and an attitude judging area (18b) which judges the attitude of the parts (W).

## Patentansprüche

1. Vorrichtung zum Ausrichten und Zuführen zur Installation in einer Transportroute bzw. einem Transportweg einer Teile-Zuführeinrichtung (20), wobei die Vorrichtung zum Ausrichten und Zuführen Stellungs- bzw. Lageidentifizierungsmittel bzw. -einrichtungen (14, 16) zum Identifizieren der Lage bzw. Stellung von Teilen (W), Umkehrmittel (13) zum Umkehren der Lage von ausgewählten Teilen (W), wobei die Lageidentifizierungsmittel (14, 16) ein unterteilendes bzw. Unterteilungsglied (14) beinhalten, welches angeordnet ist, um Teile (W) von einer stromaufwärtigen Seite des Transportwegs aufzunehmen und die Teile (W) zu einer stromabwärtigen Seite des Transportwegs zu liefern, und zwar mit einer gegebenen Orientierung, und Regel- bzw. Steuermittel (18) zum Regeln bzw. Steuern einer hin- und hergehenden Bewegung des unterteilenden Glieds (14) umfaßt, um die Teile (W) in solche eines invertierenden bzw. umkehrenden Wegs (ph1) oder eines nicht-invertierenden Wegs (ph2) basierend auf der identifizierten Lage der Teile (W) zu unterteilen, **dadurch gekennzeichnet, daß** die Umkehrmittel (13) ein Rohr (13) umfassen, welches ein Paar von in Verbindung stehenden Löchern (12a, 12b) verbindet und den invertierenden Weg (ph1) definiert, wobei eines der in Verbindung stehenden bzw. kommunizierenden Löcher (12a) zu einem Druckluft-Zufuhrloch (12c) gerichtet ist und das andere in Verbindung stehende Loch (12b) zu einem Transportaustragsloch (12d) gerichtet ist, und das unterteilende Glied (14) ein Teil (W) in einer Position aufnimmt, welche das Luftzufuhrloch (12c) und das Transportloch (12d) blockiert, und zu einer von zwei Positionen bewegbar ist, um die Blockade des Luftzufuhrlochs (12c) und des Transportlochs (12d) derart aufzuheben, daß in einer nicht blockierenden Position das unterteilende Glied (14) das Teil (W) zu der stromabwärtigen Seite des Transportwegs über den umkehrenden Weg (ph1) liefert, und in der anderen, nicht blockierenden Position das unterteilende Glied (14) das Teil (W) zu der stromabwärtigen Seite des Transportwegs über den nicht-invertierenden Weg (ph2) durch ein Umgehen des invertierenden Wegs (ph1) liefert.

2. Vorrichtung zum Ausrichten und Zuführen nach Anspruch 1, in welchem das unterteilende Glied (14) eine Gleithalterung umfaßt, welche mit zwei komplementären Löchern (14b, 14c) und einem konkaven Bereich (14a) ausgerüstet ist, welcher das Teil (W) in der blockierenden Position des unterteilenden Glieds (14) empfängt bzw. erhält und in einer der nicht blockierenden Positionen eines der komplementären Löcher (14c) eine Blockade des Transportlochs (12d) aufhebt und der konkave Bereich (14c) das Teil (W) zu dem invertierenden Weg (ph1) liefert, und in der anderen, nicht blockierenden Position das andere komplementäre Loch (14b) die Blockade des Luftzufuhrlochs (12c) aufhebt und der konkave Bereich (14a) das Teil (W) zu dem nicht-invertierenden Weg (ph1) liefert.

3. Vorrichtung zum Ausrichten und Zuführen nach Anspruch 2, in welcher ein Einsetzloch (14d), welches in dem konkaven Bereich (14a) ausgebildet ist, einen Transportschlitz definiert, und ein fotoelektrischer Sensor (16) adaptiert ist, um die Menge an Licht zu beurteilen, welche durch den Schlitz hindurchgelassen wird, um die Lage eines Teils (W) anzuzeigen.

4. Vorrichtung zum Ausrichten und Zuführen nach Anspruch 3, in welcher die Regel- bzw. Steuermittel (18) für ein Hin- und Herbewegen des unterteilenden Glieds (14) in Antwort auf ein detektiertes Signal von dem Sensor (16) betätigt werden, um das unterteilende Glied (14) zwischen der blockierenden Position und der nicht blockierenden Position zu bewegen.

5. Vorrichtung zum Ausrichten und Zuführen nach Anspruch 4, in welcher die Regel- bzw. Steuermittel (18) eine CPU (18) zum Aufnehmen des detektierten Signal und einen Zylinder (15) zum Bewegen des unterteilenden Glieds (14) in Antwort auf die CPU (18) umfassen.

6. Vorrichtung zum Ausrichten und Zuführen nach Anspruch 5, in welcher die CPU (18) durch die Verwendung eines Mikrocomputers aufgebaut ist und aus einem Meßbereich (18a), welcher eine übertragene bzw. durchgelassene Lichtmenge von einem Signal mißt, welches über den Sensor (16) eintritt, und einem Lagebeurteilungsbereich (18b) besteht, welcher die Lage bzw. Stellung der Teile (W) beurteilt.

## Revendications

1. Dispositif d'alignement et d'alimentation pour installation dans un chemin de transport d'un distributeur de pièces (20), le dispositif d'alignement et de distribution comprenant un moyen d'identification d'attitude (14, 16) pour identifier l'attitude des pièces (W), un moyen d'inversion (13) pour inverser l'attitude de pièces sélectionnées (W), le moyen d'identification d'attitude (14, 16) comprenant un élément d'aiguillage (14) prévu pour recevoir des pièces (W) venant d'un côté amont du chemin de transport et envoyer les pièces (W) à un côté aval du chemin de transport avec une orientation donnée, et un moyen de commande (18) pour commander un mouvement alternatif de l'élément d'aiguillage (14) afin d'aiguiller les pièces (W) vers l'un d'un chemin d'inversion (ph1) ou d'un chemin de non inversion (ph2) sur la base de l'attitude identifiée des pièces (W), **caractérisé en ce que** le moyen d'inversion (13) comprend un tube (13) connectant deux trous de communication (12a, 12b) et définissant le chemin d'inversion (ph1), un des trous de communication (12a) étant en face d'un trou de fourniture d'air sous pression (12c) et l'autre trou de communication (12b) étant en face d'un trou de sortie de transport (12d), et l'élément d'aiguillage (14) recevant une pièce (W) dans une position de blocage ou fermeture du trou de fourniture d'air (12c) et du trou de transport (12d) et étant déplaçable à une de deux positions pour débloquer ou ouvrir le trou de fourniture d'air (12c) et le trou de transport (12d) de sorte que, dans une première position de déblocage, l'élément d'aiguillage (14) dirige la pièce (W) vers le côté aval du chemin de transport via le chemin d'inversion (ph1) et, dans l'autre position de déblocage, l'élément d'aiguillage (14) dirige la pièce (W) vers le côté aval du chemin de transport via le chemin de non inversion (ph2) qui court-circuite le chemin d'inversion (ph1).

2. Dispositif d'alignement et d'alimentation selon la revendication 1, dans lequel l'élément d'aiguillage (14) comprend une monture coulissante comportant deux trous complémentaires (14b, 14c) et une zone concave (14a) qui reçoit la pièce (W) dans la position de blocage de l'élément (14) et, dans une des positions de déblocage, un des trous complémentaires (14c) libère le trou de transport (12d) et la zone concave (14c) envoie la pièce (W) sur le chemin d'inversion (ph1) et, dans l'autre position de déblocage, l'autre trou complémentaire (14b) libère le trou de fourniture d'air (12c) et la zone concave (14a) envoie la pièce (W) sur le chemin de non inversion (ph1).

3. Dispositif d'alignement et d'alimentation selon la revendication 2, dans lequel un trou d'insertion (14d) formé dans la zone concave (14a) définit une fente de transport, et un détecteur photoélectrique (16) est prévu pou juger la quantité de lumière transmise à travers la fente, afin d'indiquer l'attitude d'une pièce (W).

4. Dispositif d'alignement et d'alimentation selon la revendication 3, dans lequel le moyen de commande (18) pour le déplacement en va-et-vient de l'élément d'aiguillage (14) est activé en réponse à un signal détecté fourni par le détecteur (16) de manière à déplacer l'élément d'aiguillage (14) entre la position de blocage et la position de déblocage.

5. Dispositif d'alignement et d'alimentation selon la revendication 4, dans lequel le moyen de commande (18) comprend une unité centrale CPU (18) pour recevoir le signal détecté, et un vérin (15) pour déplacer l'élément d'aiguillage (14) en réponse au CPU (18).

6. Dispositif d'alignement et d'alimentation selon la revendication 5, dans lequel le CPU (18) est matérialisé par l'utilisation d'un micro-ordinateur et consiste en une zone de mesure (18a) qui mesure une quantité de lumière transmise, sur la base d'un signal fourni par le détecteur (16), et une zone de jugement d'attitude (18d) qui juge l'attitude des pièces W.
